# FASCICULE DE BREVET EUROPEEN

(11) **EP 1 964 369 B1**
(45) Date de publication et mention de la délivrance du brevet: **26.06.2019**
(21) Numéro de dépôt: 06847113.5
(22) Date de dépôt: 21.12.2006
(51) Int. Cl.: H04L 29/06

(54) **PROCÉDÉ, APPAREILS ET PROGRAMME D'ORDINATEUR DE GESTION DE FLUX ENTRE ÉQUIPEMENTS FONCTIONNANT SELON LE PROTOCOLE SIP SUR UN RÉSEAU DE TÉLÉCOMUNICATIONS**
VERFAHREN ZUR VERWALTUNG VON FLÜSSEN ZWISCHEN ANWENDUNGEN EINES TELEKOMMUNIKATIONSNETZWERKS
METHOD FOR THE MANAGEMENT OF FLOWS BETWEEN APPLIANCES OF A TELECOMMUNICATIONS NETWORK

(30) Priorité: 21.12.2005 FR 0513084
(43) Date de publication de la demande: 03.09.2008
(73) Titulaire: Orange, 75015 Paris (FR)
(72) Inventeur: CHATRAS, Bruno, F-75012 Paris (FR); CLEUZIOU, Olivier, F-94200 Ivry sur Seine (FR); PROUVOST, Sébastien, F-31300 Toulouse (FR)
(74) Mandataire: Cabinet Plasseraud
(86) Numéro de dépôt international: PCT/FR2006/002838
(87) Numéro de publication internationale: WO 2007/077349

(56) Documents cités:
- US-A1- 2003 210 649
- US-A1- 2005 163 126
- US-B1- 6 650 619
- ROSENBERG J ET AL: "SIP: Session Initiation Protocol" IETF STANDARD, INTERNET ENGINEERING TASK FORCE, IETF, CH, juin 2002 (2002-06), pages 1-269, XP015009039 ISSN: 0000-0003
- NIEMI NOKIA RESEARCH CENTER A: "Session Initiation Protocol (SIP) Event Notification Extension for Notification Throttling; draft-niemi-sipping-event-throttle-03.txt" IETF STANDARD-WORKING-DRAFT, INTERNET ENGINEERING TASK FORCE, IETF, CH, no. 3, 18 juillet 2005 (2005-07-18), pages 1-15, XP015040301 ISSN: 0000-0004

## Description

La présente invention concerne la gestion des flux entre des équipements de réseaux de télécommunications.

Dans certaines situations, il peut être nécessaire de limiter les communications émises vers un équipement donné lorsque celui-ci se trouve dans un état de charge tel qu'il ne peut faire face aux différentes demandes sans dégrader ses temps de traitement à un point qui devient préjudiciable à la qualité du service rendu. La mise en oeuvre d'une telle limitation est couramment appelée « espacement d'appels » ou encore « espacement de communications ».

Il existe aujourd'hui diverses solutions dans lesquelles un équipement congestionné peut dynamiquement commander la mise en oeuvre d'une procédure d'espacement de communications.

Par exemple, dans le cas des réseaux téléphoniques commutés (RTC) et des réseaux numériques à intégration de services (RNIS), il est prévu la possibilité pour un commutateur d'indiquer à d'autres commutateurs son état de charge au moyen de messages échangés au niveau du sous-système de transport de messages (SSTM) tant que dure la congestion. La réception de ce type de messages par un commutateur entraîne la réduction du trafic émis vers le commutateur congestionné par paliers successifs jusqu'à la disparition de la réception de ces messages SSTM.

Il est également prévu de pouvoir intégrer dans ces communications entre commutateurs un paramètre indiquant un niveau de charge, par exemple, un niveau haut ou bas.

Le protocole INAP (*Intelligent Network Application Part*), mis en oeuvre dans les architectures de réseau intelligent prévoit l'interaction entre deux équipements particuliers assurant respectivement les fonctions de commutateur d'accès au service et de point de commande de services. Une procédure permet aux points de commande de services de demander aux commutateurs d'accès aux services d'espacer leurs requêtes de déclenchement.

Dans un autre protocole dit « Megaco/H.248», il est prévu un message de commande émis d'une passerelle de média vers un contrôleur pour que le contrôleur espace les sollicitations émises vers une passerelle congestionnée.

Enfin, dans le protocole dit SIP (*Session Initiation Protocol*), une entité qui ne peut traiter une requête du fait d'un état de charge peut l'indiquer en rejetant cette requête avec une cause d'échec spécifique et peut, dans ce message de rejet, indiquer un délai à respecter avant d'émettre une nouvelle sollicitation vers cette entité.

Le document RFC 3265 de l'IETF décrit un mécanisme de gestion d'événements, dans le cadre SIP, utilisant les messages SUBSCRIBE et NOTIFY et permettant une notification d'événements asynchrone. La mise en oeuvre d'un tel service fondé sur le protocole SIP implique la coopération de deux équipements formant des noeuds d'extrémité connectés au réseau. Ces services comprennent le rappel automatique d'un utilisateur (sur libération d'une ligne d'appel préalablement appelée), la notification de la présence d'un utilisateur, la notification à un utilisateur du dépôt d'un message dans une boîte vocale de l'utilisateur, etc...

US2005163126 A1 représente l'état de l'art.

Cette application est toutefois limitée à des équipements formant des noeuds d'extrémité et à des cas spécifiques.

Les méthodes existantes présentent toutefois un certain nombre d'inconvénients.

Tout d'abord, la plupart sont adaptées pour permettre l'espacement des communications entre deux équipements particuliers et identifiés à l'avance rendant ainsi le système peu adaptable. De plus, d'autres solutions telles que celles mises en oeuvre dans le cadre du protocole SIP sont des solutions dans lesquelles l'équipement congestionné ne peut déclencher la procédure d'espacement de communications que lorsqu'il reçoit une requête et qu'il est déjà congestionné. La génération du message d'échec a pour effet d'augmenter sa charge.

Par ailleurs, d'autres solutions prévoient le développement d'un protocole particulier dédié à la gestion des flux nécessitant ainsi un niveau d'application supplémentaire dans les équipements du réseau.

Le but de la présente invention est de résoudre ces différents problèmes en proposant un procédé de notification ainsi qu'un système et des programmes correspondants, voir les revendications indépendantes 1, 9, 12 et 13, qui permettent de mettre en oeuvre une procédure d'espacement de communications de manière simple et efficace.

A cet effet, la présente invention a pour objet un procédé de notification d'état de charge d'un premier équipement à au moins un second équipement, ces équipements étant agencés pour fonctionner selon le protocole dit SIP sur un réseau de télécommunications, caractérisé en ce qu'il comporte :
- une étape d'enregistrement du second équipement auprès du premier équipement ;
- lors de modifications de l'état de charge dudit premier équipement, une étape d'émission d'un message de notification d'état de charge selon le protocole SIP, au cours de laquelle le premier équipement notifie spontanément son état de charge au second équipement préalablement enregistré.

Ainsi, grâce à l'enregistrement des seconds équipements, le procédé de l'invention permet de mettre ensuite en oeuvre une procédure d'espacement de communications sur n'importe quel réseau déjà déployé. De plus, l'émission spontanée d'un message par le premier équipement, lorsqu'il est congestionné, évite une surcharge aux instants de congestion.

La présente invention consiste donc à appliquer un mécanisme de gestion d'événements à la gestion d'un événement relatif à un équipement interne du réseau, dans le cadre d'une relation entre équipements. L'événement géré, défini pour l'exécution du mécanisme de gestion d'événements, est la charge. Dans l'invention, le mécanisme de gestion d'événements est appliqué en dehors du cadre de la mise en oeuvre d'un service fondé sur le protocole SIP et d'une coopération entre deux terminaux d'extrémité, comme décrit par le RFC 3265. Son application première est détournée. La mise en oeuvre de l'invention nécessite l'intégration dans l'équipement susceptible d'être congestionné et dans les entités dialoguant avec lui, d'une fonction d'agent utilisateur serveur SIP et de fonctions d'agent utilisateur client SIP respectivement.

Selon d'autres modes de réalisation de l'invention :
- ladite étape d'enregistrement comprend la mise en mémoire, dans ledit premier équipement, d'une liste desdits seconds équipements ;
- ladite étape d'enregistrement comprend l'enregistrement automatique, par ledit premier équipement, de seconds équipements avec lesquels il communique au cours de son fonctionnement ;
- lesdites requêtes d'enregistrement sont des messages du type SUBSCRIBE et lesdits messages de notification d'état sont des messages de type dit NOTIFY ;
- lesdits messages de notification d'état sont des messages de type dit MESSAGE ;
- ledit message de notification comporte des paramètres d'espacement de communication directement utilisables par lesdits seconds équipements ;
- les paramètres d'espacement de communication comprennent au moins l'un des éléments du groupe comprenant une durée minimale entre les requêtes d'établissement d'une session, une durée minimale entre les requêtes pour une transaction autonome, un nombre maximal de requêtes par intervalle de temps et un débit maximal de flux ;
- le premier équipement émet des messages de notification de son état de charge lorsqu'au moins un paramètre définissant son état de charge franchit un seuil prédéterminé.

L'invention porte également sur un procédé de gestion de flux entre un premier équipement et un second équipement, ces équipements étant agencés pour fonctionner selon le protocole dit SIP sur un réseau de télécommunications caractérisé en ce que, ledit second équipement s'étant préalablement enregistré auprès du premier équipement, ledit procédé met en oeuvre, sur réception d'un message de notification d'état de charge selon le protocole SIP, une procédure d'espacement de communications émises depuis le second équipement (4₁ à 4_{N}) vers le premier équipement (2), en fonction de l'état de charge de ce dernier.

Selon d'autres modes de réalisation :
- ladite étape d'enregistrement comprend l'émission de requêtes d'enregistrement par chacun desdits seconds équipements vers ledit premier équipement ;
- ledit message de notification comporte une information d'état de charge dudit premier équipement, le procédé comprenant en outre une étape de détermination par chacun desdits seconds équipements de paramètres d'espacement de communications en fonction de cette information d'état de charge ;

- différents types de communications peuvent être émises par lesdits seconds équipements vers ledit premier équipement, l'espacement de ces communications étant réalisé en fonction de leur type ;
- le procédé comprend l'enregistrement d'une pluralité de seconds équipements auprès du premier équipement, les paramètres d'espacement respectivement appliqués par lesdits seconds équipements étant indépendants les uns des autres ;

L'invention porte également sur un équipement fonctionnant selon le protocole dit SIP sur un réseau de télécommunications, caractérisé en ce qu'il comporte :
- des moyens d'enregistrement d'au moins un autre équipement du réseau ; et
- des moyens d'émission de messages de notification de son état de charge selon le protocole SIP, à l'attention de chacun desdits autres équipements lors de modifications de son état de charge, en vue d'un espacement de communications émises par ces autres équipements vers lui.

L'invention porte aussi sur un équipement fonctionnant selon le protocole dit SIP sur un réseau de télécommunications, caractérisé en ce qu'il comporte :
- des moyens de réception de messages de notification de l'état de charge d'un équipement particulier, émis selon le protocole SIP ; et
- des moyens d'espacement de communications émises vers ledit équipement particulier en fonction de l'état de charge de ce dernier.

Enfin, l'invention porte sur un système de gestion de flux entre des équipements tels que définis précédemment et sur les programmes d'ordinateurs correspondants.

D'autres avantages de l'invention apparaîtront à la lecture des revendications, de la description et des dessins sur lesquels :
- la figure 1 est un schéma synoptique d'un système selon l'invention ; et
- la figure 2 représente le procédé de l'invention sous la forme d'un diagramme de flux entre les différents équipements du système de la figure 1.

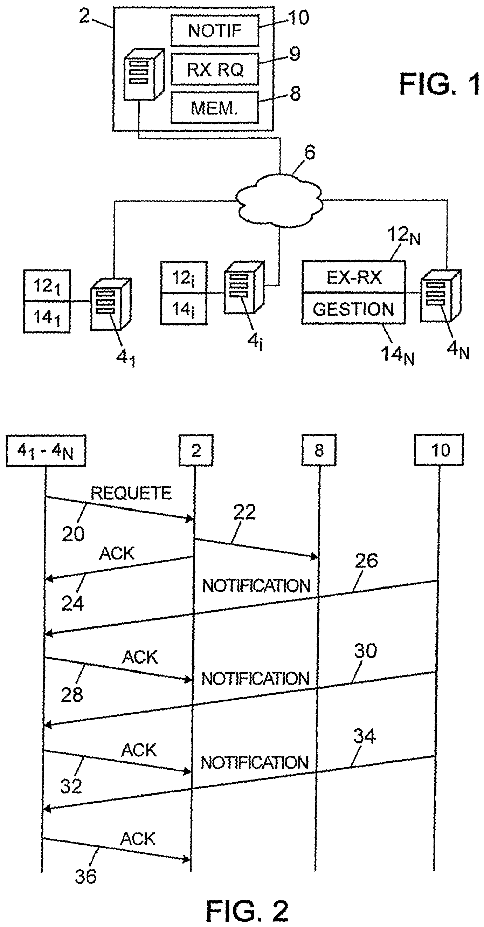

Le système représenté en référence à la figure 1 comprend un premier équipement 2 relié à une pluralité de seconds équipements 4₁ à 4_{N}, par un réseau de télécommunications 6 tel que le réseau Internet. Dans le mode de réalisation décrit, ces équipements sont des serveurs.

Chacun des serveurs 2 et 4₁ à 4_{N} utilise le protocole SIP (en anglais *Session Initiating Protocol*) tel que défini par l'I.E.T.F., R.F.C. 2543 qui permet l'établissement, la modification et la terminaison de sessions multimédia dans un réseau fonctionnant selon le protocole Internet IP. Le protocole SIP permet également des procédures de notification d'événements et l'envoi d'informations en dehors du contexte d'une session, de sorte que ce protocole est largement utilisé pour des commandes de services de messagerie instantanée.

Ainsi, dans un environnement SIP, il existe différents types de communications tels que des requêtes d'établissement de sessions ainsi que des requêtes échangées hors de tout dialogue et ne créant pas nécessairement un dialogue SIP, qui sont alors désignées sous le terme de requêtes de transactions autonomes.

En conséquence, dans le cadre du fonctionnement du protocole SIP, un même équipement peut se trouver sollicité pour un plus grand nombre de dialogues ou de messages qu'il ne l'aurait été dans d'autres architectures.

Le premier serveur 2 est, dans le mode de réalisation décrit, l'équipement susceptible d'entrer dans un état de congestion.

Outre des moyens classiques et non représentés de communication sur le réseau 6, ce premier serveur 2 comporte :
- une mémoire 8 destinée à contenir une liste d'équipements à notifier ;
- un module 9 de réception de requêtes d'enregistrement émanant des équipements à notifier, apte à stocker des données relatives à ces derniers dans la mémoire 8 ; et
- un module 10 de notification d'état, agencé pour émettre des messages de notification d'état de l'équipement 2.

De manière correspondante, chacun des seconds serveurs 4₁ à 4_{N} comporte un module 12₁ à 12_{N} de communication sur le réseau 6, notamment agencé pour émettre des requêtes d'enregistrement vers l'équipement 2 et pour recevoir des notifications d'état de charge de l'équipement 2.

Chacun des serveurs 4₁ à 4_{N} comprend également un gestionnaire de flux 14₁ à 14_{N} gérant notamment le flux à destination du premier serveur 2 et agencé pour mettre en oeuvre une procédure d'espacement de communications et pour y mettre fin, sur réception de notifications d'état de charge en provenance du serveur 2.

En référence à la figure 2, on va maintenant décrire le procédé de l'invention tel que mis en oeuvre dans le système de la figure 1.

Le procédé débute par une étape 20 au cours de laquelle les serveurs 4₁ à 4_{N} émettent chacun une requête d'enregistrement vers le premier équipement 2. La requête d'enregistrement est formulée dans le protocole SIP de la manière représentée dans le tableau 1 suivant.

**Tableau1**

| |
|---|
| SUBSCRIBE sip :AS@service.francetelecom.com SIP/2.0 |
| To : <sip : AS@service.francetelecom.com> |
| From: <sip : CS@francetelecom.com> |
| Contact: <sip : CS@CS1.francetelecom.com> |
| Event: espacement d'appel |
| Accept: application/ call-space |

Ce message est un message SUBSCRIBE, tel que défini par le protocole SIP, de souscription à la notification d'un événement. En l'espèce, ce message est détourné de son utilisation initiale et l'événement associé au message SUBSCRIBE correspond à la congestion du premier serveur 2.

Il s'en suit une étape 22 au cours de laquelle l'équipement 2 mémorise l'adresse des équipements 4₁ à 4_{N} dans la mémoire 8, par exemple en créant une liste des identifiants des équipements à notifier de son état.

En fonction des modes de réalisation, on mémorise directement les adresses réseau des équipements ou des identifiants associés à de telles adresses.

Cette étape 22 d'enregistrement est suivie d'une étape d'acquittement 24 et d'une étape 26 de notification de l'état courant, émise par le serveur 2 vers chaque nouvel équipement 4₁ à 4_{N} de la liste.

Selon le protocole SIP, cette notification initiale est formulée de la manière représentée dans le tableau 2 ci-après.

**Tableau 2**

| |
|---|
| NOTIFY sip : CS@CS1.francetelecom.com SIP/2.0 |
| To: <sip : CS@francetelecom.com> |
| From: <sip : AS@service.francetelecom.com> |
| Contact: <sip : AS@servicel.francetelecom.com> |
| Event : espacement d'appel |
| Subscription-State : active |
| Content-Type : application/call-space |
| |
| Call space needed : No |

Ce message est un message NOTIFY, tel que défini par le protocole SIP, pour notifier de l'état courant de l'événement correspondant à la congestion du premier serveur 2. L'indication "Call space needed : No", dont la traduction est "Espacement d'appel nécessaire : non", signifie que l'espacement des communications n'est pas nécessaire, c'est-à-dire qu'implicitement, il s'agit d'une notification d'un état de non congestion de l'équipement 2.

L'équipement 4 répond à cette notification d'état de charge par un message d'acquittement au cours d'une étape 28.

Ultérieurement, lors de modifications de son état de charge, le premier serveur 2 adresse un message comportant des informations dépendantes de son état de charge, ou notification d'état, à chacun des serveurs 4₁ à 4_{N} enregistrés pour demander la mise en oeuvre d'une procédure d'espacement de communications lors d'une étape 30. Les modifications de l'état de charge sont détectées par exemple par le franchissement, par certains paramètres définissant l'état de charge, de seuils prédéterminés.

Ces seuils peuvent être choisis de manière à répondre à une congestion, comme dans l'exemple décrit, ou de manière à prévenir ou ralentir une situation de congestion en déclenchant la mise en oeuvre de la procédure d'espacement avant que la congestion ne se produise, c'est-à-dire avant d'atteindre un niveau de charge préjudiciable à la qualité du service.

Ce message est transmis spontanément par le premier serveur 2, c'est-à-dire sans qu'il soit nécessaire de recevoir préalablement une requête provenant d'un des seconds serveurs 4₁ à 4_{N}.

Cette notification se présente dans le mode de réalisation décrit, de la manière représentée dans le tableau 3.

**Tableau 3**

| |
|---|
| NOTIFY sip : CS@CS1.francetelecom.com SIP/2.0 |
| To: <sip:CS@francetelecom.com> |
| From : <sip:AS@service.francetelecom.com> |
| Contact: <sip:AS@service1.francetelecom.com> |
| Event: espacement d'appel |
| Subscription-State : active |
| Content-Type : application/call-space |
| |
| Call space needed : Yes |
| Minimum time between requests establishing a dialog: 10 |
| Minimum time between requests for standlone transaction: 99999999 |
| Call space duration: 300 |

Ce message est un message NOTIFY tel que défini par le protocole SIP, de notification de l'état de l'événement correspondant à la congestion du serveur 2. L'indication "Call space needed : Yes", dont la traduction est "Espacement d'appel nécessaire : oui", signifie implicitement qu'il s'agit d'une notification d'un état de congestion de l'équipement 2.

Cette notification d'état indique également différents paramètres d'espacement des communications spécifiés par le serveur 2 au serveur 4ᵢ et directement utilisables. En l'espèce, ces paramètres définissent une durée minimale entre les requêtes d'établissement d'un dialogue et une durée minimale entre les requêtes pour une transaction autonome. Ainsi, le premier serveur 2 demande aux serveurs 4₁ à 4_{N} d'espacer les requêtes établissant un dialogue SIP en fixant un délai de 10 secondes et de ne plus envoyer aucune requête établissant une transaction autonome en fixant un délai infini, afin de prioriser les établissements de sessions. Ce message de notification indique également, dans l'exemple considéré, que la durée de validité de cette demande d'espacement des requêtes est de 300 secondes.

La réception de ce message de notification déclenche la mise en oeuvre, par les gestionnaires 14₁ à 14_{N} de flux, d'une procédure d'espacement des communications vers le serveur 2. Les paramètres d'espacement contenus dans les différentes notifications envoyées respectivement aux différents serveurs 4₁ à 4_{N} peuvent être différents d'un serveur 4ᵢ à l'autre, de sorte que chaque serveur 4₁ à 4_{N} gère de manière autonome la durée minimum entre les messages émis vers le premier serveur 2 et ce, en fonction des paramètres d'espacement contenus dans le message de notification reçu.

Les paramètres d'espacement peuvent être communs à tous les équipements ou communs à des groupes ou encore distincts pour chacun. En fonction des cas, le même message de notification est adressé à tous les équipements ou aux équipements d'un groupe, ou encore des messages distincts sont envoyés à chaque équipement. Ainsi, les paramètres d'espacement respectivement envoyés aux seconds serveurs 4₁ à 4_{N} et appliqués par ces derniers lors de la procédure d'espacement sont indépendants les uns des autres.

Un acquittement est ici transmis au premier serveur 2 par chacun des serveurs 4₁ à 4_{N} lors d'une étape 32.

Du fait des paramètres spécifiés dans la notification d'état de charge, dans la suite de leur fonctionnement, les serveurs 4₁ à 4_{N} espacent les demandes d'établissement de nouvelles sessions et les requêtes autonomes. Les communications transmises dans le cadre de sessions déjà établies ne sont pas espacées.

Lorsque le serveur 2 quitte l'état de congestion, il envoie une nouvelle notification d'état afin de mettre fin à la procédure d'espacement au cours d'une étape 34. Un exemple d'une telle nouvelle notification est représenté sur le tableau 4.

**Tableau 4**

| |
|---|
| NOTIFY sip : CS@CS1.francetelecom.com SIP/2.0 |
| To: <sip:CS@francetelecom.com> |
| From: <sip :AS@service.francetelecom.com> |
| Contact: <sip:AS@service1.francetelecom.com> |
| Event: espacement d'appel |
| Subscription-State : active |
| Content-Type : application/call-space |
| |
| Call space needed : No |

Comme précédemment, il s'agit d'un message NOTIFY indiquant l'état de l'événement "congestion". L'indication "Call space needed : No", dont la traduction est "Espacement d'appel nécessaire : non" indique la fin de l'événement de congestion et signifie implicitement qu'il s'agit d'une notification d'un état de non congestion de l'équipement 2. Après réception, les serveurs 4₁ à 4_{N} répondent par un acquittement lors d'une étape 36.

Ainsi, en utilisant le protocole SIP existant, le procédé de l'invention peut être mis en oeuvre entre n'importe quels équipements du réseau, notamment du fait de l'enregistrement qui permet une configuration automatique et du fait de l'absence d'une couche applicative supplémentaire.

Par ailleurs, le procédé de l'invention permet à un équipement congestionné de déclarer son état spontanément et sans attendre de recevoir une requête. Ceci permet de diminuer sa charge lors des périodes de congestion. Cet avantage est accru par la gestion de la procédure d'espacement de manière autonome au niveau des seconds équipements.

Dans un autre mode de réalisation, les messages de notification émis par le premier équipement 2 comportent uniquement une information d'état de charge. Dans ce cas, tous les seconds équipements sont adaptés pour déterminer localement les paramètres de la procédure d'espacement en fonction de cette information d'état de charge. Comme précédemment, les paramètres d'espacement respectivement déterminés et appliqués par les seconds serveurs 4₁ à 4_{N} sont indépendants les uns des autres.

Bien entendu, d'autres modes de réalisation de l'invention sont également possibles.

Par exemple, dans un autre mode de réalisation, il n'y a pas d'émission de requêtes d'enregistrement initiées par les seconds équipements.

Dans une première variante, le premier serveur enregistre, au cours de son fonctionnement normal, les identifiants de tous les équipements susceptibles de communiquer avec lui et, lors d'une modification de son état de charge, adresse un message de notification à ces équipements.

Dans une seconde variante, le premier serveur 2 dispose d'une liste préenregistrée des équipements à notifier.

Dans ces différents modes de réalisation, le message de notification peut être un message de type MESSAGE tel que défini par le protocole SIP.

Il est également possible de transmettre, dans les messages de notification, des paramètres de mise en oeuvre de la procédure d'espacement autres que ceux décrits, tels que par exemple un nombre maximal de requêtes par intervalle de temps, un débit maximal à respecter pour le flux ou autres.

Ce procédé peut également être mis en oeuvre quelque soit le rôle de l'équipement et notamment, par rapport au protocole SIP, les équipements peuvent remplir indifféremment les fonctions de serveur d'enregistrement, de serveur d'appel, de serveur d'application, de serveur de présence et fonctionner en *proxy*, en agents utilisateurs, en *back to back.* Cette procédure d'espacement peut également être mise en oeuvre sur toute interface SIP, notamment les interfaces de commande de session, les interfaces vers des serveurs d'application, les interfaces de notification de messages ou d'état de présence d'un usager.

Les équipements peuvent être indifféremment des équipements formant des noeuds intermédiaires du réseau, dit *network nodes,* ou des noeuds d'extrémité, dits *end nodes.*

Enfin, l'invention peut également être appliquée à d'autres protocoles. Ainsi, un message de notification d'état émis selon le protocole SIP déclenche la mise en oeuvre d'une procédure d'espacement des communications effectuées selon un autre protocole tel que des communications IP.

Les moyens nécessaires à la mise en oeuvre de l'invention peuvent être réalisés sous la forme de programmes ou fragments de programmes et notamment, sous la forme d'un programme d'ordinateur de notification d'état de charge pour un équipement fonctionnant selon le protocole dit SIP sur un réseau de télécommunications, comprenant des instructions qui, lorsqu'elles sont exécutées par ledit équipement, amènent celui-ci à :
- enregistrer au moins un autre équipement du réseau à notifier ; et
- émettre vers l'autre équipement enregistré des messages de notification de son état de charge selon le protocole SIP, dans le but de déclencher une procédure d'espacement de communications émises par ledit autre équipement enregistré, vers lui.

Ou encore, sous la forme d'un programme d'ordinateur de gestion de flux pour un équipement fonctionnant selon le protocole dit SIP sur un réseau de télécommunications, comprenant des instructions qui, lorsqu'elles sont exécutées par ledit équipement, amènent celui-ci à :
- émettre une requête d'enregistrement vers un équipement particulier ; et
- sur réception d'un message de notification d'état de charge de cet équipement particulier, émis selon le protocole SIP, déclencher la mise en oeuvre d'une procédure d'espacement de communications émises par ledit équipement (4₁ à 4_{N}) vers ledit équipement particulier.

## Revendications

1. Procédé de gestion de flux entre un premier équipement (2) et au moins un deuxième équipement (4₁ à 4_{N}), ces équipements étant agencés pour fonctionner selon le protocole dit SIP sur un réseau de télécommunications (6), **caractérisé en ce qu'**il comporte :
- une étape (22) de souscription, du deuxième équipement (4₁ à 4_{N}) auprès du premier équipement (2), à une notification d'un événement correspondant à l'état de congestion dudit premier équipement ; et
- lors de modifications de l'état de congestion dudit premier équipement, une étape (26, 30, 34) d'émission d'un message de notification d'état de congestion selon le protocole SIP, au cours de laquelle le premier équipement notifie son état de congestion au deuxième équipement (4₁ à 4_{N}) ayant souscrit à ladite notification ;
- la mise en oeuvre d'une procédure d'espacement de communications émises depuis le deuxième équipement (4₁ à 4_{N}) vers ledit premier équipement (2), en fonction de l'état de congestion dudit premier équipement (2).

2. Procédé selon la revendication 1, **caractérisé en ce que** ladite étape de souscription comprend l'émission de requêtes d'enregistrement par chacun desdits seconds équipements vers ledit premier équipement.

3. Procédé selon la revendication 2, **caractérisé en ce que** lesdites requêtes de souscription sont des messages du type SUBSCRIBE et **en ce que** lesdits messages de notification d'état sont des messages de type dit NOTIFY.

4. Procédé selon la revendication 1, **caractérisé en ce que** lesdits messages de notification d'état sont des messages de type dit MESSAGE.

5. Procédé selon la revendication 1, **caractérisé en ce que** ledit message de notification comporte des paramètres d'espacement de communication directement utilisables par le second équipement.

6. Procédé selon la revendication 1, **caractérisé en ce que** le premier équipement émet des messages de notification de son état de congestion lorsqu'au moins un paramètre définissant son état de congestion franchit un seuil prédéterminé.

7. Procédé selon l'une quelconque des revendications précédentes, **caractérisé en ce que** ledit message de notification comportant une information d'état de congestion dudit premier équipement, le procédé comprend en outre une étape de détermination par le second équipement de paramètres d'espacement de communications en fonction de cette information d'état de congestion.

8. Procédé selon l'une quelconque des revendications précédentes, **caractérisé en ce que** différents types communications peuvent être émises par le second équipement vers ledit premier équipement, l'espacement des communications étant réalisé en fonction de leur type.

9. Premier équipement (2) fonctionnant selon le protocole dit SIP sur un réseau de télécommunications (6), **caractérisé en ce qu'**il comporte :
- des moyens (8) de souscription d'au moins un deuxième équipement (4₁ à 4_{N}) du réseau à une notification d'un événement correspondant à l'état de congestion dudit premier équipement; et
- des moyens (10) d'émission d'au moins un message de notification de son état de congestion selon le protocole SIP, à l'attention de chacun desdits deuxièmes équipements ayant souscrit à ladite notification lors de modifications de son état de congestion, ledit message de notification étant destiné à déclencher la mise en oeuvre d'une procédure d'espacement de communications émises depuis le deuxième équipement (4₁ à 4_{N}) vers ledit premier équipement (2).

10. Equipement selon la revendication 9, dans lequel les moyens de souscription sont agencés pour recevoir un message SUBSCRIBE de souscription à un événement, tel que défini par le protocole SIP, l'événement associé au message SUBSCRIBE correspondant à la congestion du premier équipement.

11. Equipement selon la revendication 9, dans lequel les moyens de notification sont agencés pour émettre un message NOTIFY de notification de l'état d'un événement, tel que défini par le protocole SIP, l'événement associé au message NOTIFY correspondant à la congestion du premier équipement.

12. Système de gestion de flux entre des équipements (2, 4₁ à 4_{N}) fonctionnant selon le protocole dit SIP sur un réseau de télécommunications (6), **caractérisé en ce qu'**il comprend :
- un premier équipement (2) comportant :
des moyens (8) de souscription d'au moins un deuxième équipement (4₁ à 4_{N}) du réseau à une notification d'un événement par l'intermédiaire d'un
message correspondant à l'état de congestion dudit premier équipement; et des moyens (10) d'émission d'au moins un message de notification de son état de congestion selon le protocole SIP, à l'attention de chacun desdits deuxièmes équipements ayant souscrit à ladite notification lors de modifications de son état de congestion; et
- ledit au moins un deuxième équipement (4₁ à 4_{N}), fonctionnant selon le protocole dit SIP sur ledit réseau de télécommunications (6) et comportant :
des moyens (12₁ à 12_{N}) de réception de messages de notification de l'état de congestion dudit premier équipement, émis selon le protocole SIP ; et
des moyens d'espacement de communications émises vers ledit premier équipement en fonction de l'état de congestion dudit premier équipement (2), configurés pour déclencher la mise en oeuvre d'une procédure d'espacement de communications émises vers ledit premier équipement (2) suite à la réception dudit message de notification.

13. Programme d'ordinateur de notification d'état de congestion pour un premier équipement (2) fonctionnant selon le protocole dit SIP sur un réseau de télécommunications (6), comprenant des instructions de code de programme qui, lorsqu'elles sont exécutées par ledit équipement, amènent celui-ci à :
- enregistrer la souscription d'au moins un deuxième équipement (4₁ à 4_{N}) du réseau auprès dudit premier équipement (2), à une notification d'un événement correspondant à l'état de congestion dudit premier équipement (2) et
- lors de modifications de l'état de congestion dudit premier équipement, émettre vers ledit deuxième équipement (4₁ à 4_{N}) enregistré des messages de notification de son état de congestion selon le protocole SIP, via lesquels ledit premier équipement (2) notifie son état de congestion audit deuxième équipement (4i à 4N),
- mettre en oeuvre une procédure d'espacement de communications émises depuis ledit deuxième équipement (4i à 4N) vers ledit premier équipement (2), en fonction de l'état de congestion dudit premier équipement (2).

## Patentansprüche

1. Verfahren zur Flussverwaltung zwischen einer ersten Ausrüstung (2) und mindestens einer zweiten Ausrüstung (4₁ bis 4_{N}), wobei diese Ausrüstungen dazu vorgesehen sind, nach dem so genannten SIP-Protokill in einem Telekommunikationsnetzwerk (6) zu funktionieren, **dadurch gekennzeichnet, dass** es umfasst:
- einen Schritt (22) des Abonnierens der zweiten Ausrüstung (4₁ bis 4_{N}) bei der ersten Ausrüstung (2) für eine Mitteilung eines Ereignisses entsprechend dem Auslastungszustand der ersten Ausrüstung; und
- bei Änderungen des Auslastungszustands der ersten Ausrüstung einen Schritt (26, 30, 34) des Sendens einer Mitteilungsnachricht zum Auslastungszustand nach dem SIP-Protokoll, während dessen die erste Ausrüstung ihren Auslastungszustand an die zweite Ausrüstung (4₁ bis 4_{N}), die diese Mitteilung abonniert hat, mitteilt;
- den Einsatz eines Verfahrens zur Beabstandung der von der zweiten Ausrüstung (4₁ bis 4_{N}) zu der ersten Ausrüstung (2) gesandten Kommunikationen in Abhängigkeit vom Auslastungszustand der ersten Ausrüstung (2).

2. Verfahren nach Anspruch 1, **dadurch gekennzeichnet, dass** der Schritt des Abonnierens das Senden von Registrierungsanträgen von jeder der zweiten Ausrüstungen zu der ersten Ausrüstung umfasst.

3. Verfahren nach Anspruch 2, **dadurch gekennzeichnet, dass** die Abonnieranträge Nachrichten vom Typ SUBSCRIBE sind, und dass die Zustandsmitteilungsnachrichten Nachrichten vom Typ NOTIFY sind.

4. Verfahren nach Anspruch 1, **dadurch gekennzeichnet, dass** die Zustandsmitteilungsnachrichten Nachrichten vom Typ MESSAGE sind.

5. Verfahren nach Anspruch 1, **dadurch gekennzeichnet, dass** die Mitteilungsnachricht Kommunikationsabstandsparameter umfasst, die direkt von der zweiten Ausrüstung verwendbar sind.

6. Verfahren nach Anspruch 1, **dadurch gekennzeichnet, dass** die erste Ausrüstung Mitteilungsnachrichten zu ihrem Auslastungszustand entsendet, wenn mindestens ein Parameter, der ihren Auslastungszustand definiert, einen vorbestimmten Grenzwert überschreitet.

7. Verfahren nach einem der vorhergehenden Ansprüche, **dadurch gekennzeichnet, dass** die Mitteilungsnachricht eine Information zum Auslastungszustand der ersten Ausrüstung umfasst, wobei das Verfahren ferner einen Schritt der Bestimmung von Kommunikationsabstandsparametern in Abhängigkeit von dieser Information zum Auslastungszustand durch die zweite Ausrüstung umfasst.

8. Verfahren nach einem der vorhergehenden Ansprüche, **dadurch gekennzeichnet, dass** verschiedene Kommunikationstypen von der zweiten Ausrüstung zu der ersten Ausrüstung entsandt werden können, wobei die Beabstandung der Kommunikationen je nach ihrem Typ erfolgt.

9. Erste Ausrüstung (2), die nach dem so genannten SIP-Protokoll in einem Telekommunikationsnetzwerk (6) funktioniert, **dadurch gekennzeichnet, dass** sie umfasst:
- Mittel (8) zum Abonnieren mindestens einer zweiten Ausrüstung (4₁ bis 4_{N}) des Netzwerks für eine Mitteilung eines Ereignisses entsprechend dem Auslastungszustand der ersten Ausrüstung; und
- Mittel (10) zum Senden von mindestens einer Mitteilungsnachricht zu ihrem Auslastungszustand nach dem SIP-Protokoll, an jede der zweiten Ausrüstungen, die diese Mitteilung abonniert hat, wobei die Mitteilungsnachricht dafür da, um den Einsatz eines Verfahrens zur Beabstandung der von der zweiten Ausrüstung (4i bis 4N) zu der ersten Ausrüstung (2) gesandten Kommunikationen auszulösen.

10. Ausrüstung nach Anspruch 9, bei der die Abonniermittel dazu vorgesehen sind, eine Nachricht SUBSCRIBE des Abonnierens eines Ereignisses, wie durch das SIP-Protokoll definiert, zu empfangen, wobei das der Nachricht SUBSCRIBE zugeordnete Ereignis der Auslastung der ersten Ausrüstung entspricht.

11. Ausrüstung nach Anspruch 9, bei der die Mitteilungsmittel dazu vorgesehen sind, eine Nachricht NOTIFY der Mitteilung des Zustands eines Ereignisses, wie durch das SIP-Protokoll definiert, zu entsenden, wobei das der Nachricht NOTIFY zugeordnete Ereignis der Auslastung der ersten Ausrüstung entspricht.

12. System zur Flussverwaltung zwischen Ausrüstungen (2, 4₁ bis 4_{N}), die nach dem so genannten SIP-Protokill in einem Telekommunikationsnetzwerk (6) funktionieren, **dadurch gekennzeichnet, dass** es umfasst:
- eine erste Ausrüstung, umfassend:
Mittel (8) zum Abonnieren mindestens einer zweiten Ausrüstung (4₁ bis 4_{N}) des Netzwerks einer Mitteilung eines Ereignisses mittels einer Nachricht entsprechend dem Auslastungszustand der ersten Ausrüstung; und
Mittel (10) zum Senden von mindestens einer Mitteilungsnachricht zu ihrem Auslastungszustand nach dem SIP-Protokoll, an jede der zweiten Ausrüstungen, die diese Mitteilung abonniert hat; und
- die mindestens eine zweite Ausrüstung (4₁ bis 4_{N}), die nach dem so genannten SIP-Protokoll in dem Telekommunikationsnetzwerk (6) funktioniert und umfasst:
Mittel (12₁ bis 12_{N}) für den Empfang von Mitteilungsnachrichten zum Auslastungszustand der ersten Ausrüstung, die nach dem SIP-Protokoll gesandt werden; und
Mittel zur Beabstandung der zu der ersten Ausrüstung gesandten Kommunikationen in Abhängigkeit vom Auslastungszustand der ersten Ausrüstung (2), die angeordnet sind, den Einsatz eines Verfahrens zur Beabstandung der zu der ersten Ausrüstung (2) gesandten Kommunikationen nach Empfang von der gesagten Nachricht auszulösen.

13. Computerprogramm zur Mitteilung eines Auslastungszustands für eine erste Ausrüstung (2), die nach dem so genannten SIP-Protokoll in einem Telekommunikationsnetzwerk (6) funktioniert, umfassend Programmcodeanweisungen, die, wenn sie von der Ausrüstung ausgeführt werden, diese dazu bringen:
- das Abonnieren mindestens einer zweiten Ausrüstung (4₁ bis 4_{N}) des Netzwerks bei der ersten Ausrüstung (2) für eine Mitteilung eines Ereignisses entsprechend dem Auslastungszustand der ersten Ausrüstung (2) zu registrieren, und
- bei Änderungen des Auslastungszustands der ersten Ausrüstung zu der registrierten zweiten Ausrüstung (4₁ bis 4_{N}) Mitteilungsnachrichten zu ihrem Auslastungszustand nach dem SIP-Protokoll zu senden, über die die erste Ausrüstung (2) ihren Auslastungszustand an die zweite Ausrüstung (4i bis 4N) mitteilt,
- ein Verfahren zur Beabstandung von Kommunikationen, die von der zweiten Ausrüstung (4i bis 4N) an die erste Ausrüstung (2) gesandt werden, in Abhängigkeit vom Auslastungszustand der ersten Ausrüstung (2) einzusetzen.

## Claims

1. Method for flow management between a first piece of equipment (2) and at least one second piece of equipment (4₁ to 4_{N}), these pieces of equipment being designed to operate according to the so-called SIP protocol on a telecommunications network (6), **characterized in that** it comprises:
- a step (22) of subscribing, of the second piece of equipment (4₁ to 4_{N}) with the first piece of equipment (2), to a notification of an event corresponding to the congestion state of said first piece of equipment; and
- upon modifications of the congestion state of said first piece of equipment, a step (26, 30, 34) of sending a congestion state notifying message according to the SIP protocol, in the course of which the first piece of equipment notifies the second piece of equipment (4₁ to 4_{N}), that has subscribed to said notification, of its congestion state;
- the implementation of a procedure for spacing communications sent from the second piece of equipment (4₁ to 4_{N}) to said first piece of equipment (2), as a function of the congestion state of said first piece of equipment (2).

2. Method according to Claim 1, **characterized in that** said subscribing step comprises the sending of registration requests by each of said second pieces of equipment to said first piece of equipment.

3. Method according to Claim 2, **characterized in that** said subscription requests are messages of the SUBSCRIBE type and **in that** said state notifying messages are messages of so-called NOTIFY type.

4. Method according to Claim 1, **characterized in that** said state notifying messages are messages of so-called MESSAGE type.

5. Method according to Claim 1, **characterized in that** said notifying message comprises communication spacing parameters directly usable by the second piece of equipment.

6. Method according to Claim 1, **characterized in that** the first piece of equipment sends notifying messages about its congestion state when at least one parameter defining its congestion state crosses a predetermined threshold.

7. Method according to any one of the preceding claims, **characterized in that**, said notifying message comprising congestion state information of said first piece of equipment, the method further comprises a step of determining, by the second piece of equipment, of communications spacing parameters as a function of this congestion state information.

8. Method according to any one of the preceding claims, **characterized in that** various communication types can be sent by the second piece of equipment to said first piece of equipment, the spacing of the communications being effected as a function of their type.

9. First piece of equipment (2) operating according to the so-called SIP protocol on a telecommunications network (6), **characterized in that** it comprises:
- means (8) for subscribing of at least one second piece of equipment (4₁ to 4_{N}) of the network to a notification of an event corresponding to the state of congestion of said first piece of equipment; and
- means (10) for sending at least one notifying message about its congestion state according to the SIP protocol, for the attention of each of said second pieces of equipment that has subscribed to said notification, upon modifications of its congestion state, said notifying message being for triggering the implementation a procedure for spacing communications sent from the second piece of equipment (4₁ to 4_{N}) to said first piece of equipment (2).

10. Piece of equipment according to Claim 9, in which the subscribing means are designed to receive a SUBSCRIBE message subscribing to an event, such as defined by the SIP protocol, the event associated with the SUBSCRIBE message corresponding to the congestion on the first piece of equipment.

11. Piece of equipment according to Claim 9, in which the notifying means are designed to send a NOTIFY notifying message about the state of an event, such as defined by the SIP protocol, the event associated with the NOTIFY message corresponding to the congestion on the first piece of equipment.

12. System for flow management between pieces of equipment (2, 4₁ to 4_{N}) operating according to the so-called SIP protocol on a telecommunications network (6), **characterized in that** it comprises:
- a first piece of equipment comprising:
means (8) for subscribing of at least one second piece of equipment (4₁ to 4_{N}) of the network to a notification of an event by way of a message corresponding to the congestion state of said first piece of equipment; and
means (10) for sending at least one notifying message about its congestion state according to the SIP protocol, for the attention of each of said second pieces of equipment that has subscribed to said notification, upon modifications of its congestion state; and
- said at least one second piece of equipment (4₁ to 4_{N}) operating according to the so-called SIP protocol on said telecommunications network (6) and comprising:
means (12₁ to 12_{N}) for receiving notifying messages about the congestion state of said first piece of equipment, sent according to the SIP protocol; and
means for spacing communications sent to said first piece of equipment as a function of the congestion state of said first piece of equipment (2), configured to trigger the implementation of a procedure for spacing communications sent to said first piece of equipment (2), following the reception of said notifying message.

13. Computer program for notifying congestion state for a first piece of equipment (2) operating according to the so-called SIP protocol on a telecommunications network (6), comprising program code instructions which, when they are executed by said piece of equipment, induce the latter to:
- register the subscribing of at least one second piece of equipment (4₁ to 4_{N}) of the network with said first piece of equipment (2), to a notification of an event corresponding to the state of congestion of said first piece of equipment (2); and
- upon modifications of the congestion state of said first equipment, send to said second registered piece of equipment (4₁ to 4_{N}) notifying messages about its congestion state according to the SIP protocol, by way of which said first piece of equipment (2) notifies said second piece of equipment (4₁ to 4_{N}) of its congestion state,
- implement a procedure for spacing communications sent from the second piece of equipment (4₁ to 4_{N}) to said first piece of equipment (2), as a function of the congestion state of said first piece of equipment (2).
